# EUROPÄISCHE PATENTSCHRIFT

(11) **EP 2 532 041 B1**
(45) Veröffentlichungstag und Bekanntmachung des Hinweises auf die Patenterteilung: **04.12.2013**
(21) Anmeldenummer: 11706739.7
(22) Anmeldetag: 04.02.2011
(51) Int. Cl.: H01M 2/20, H01M 10/42, H01M 10/48, H01M 6/50, H01M 10/44

(54) **ELEKTRISCHER ENERGIESPEICHER**
ELECTRIC ENERGY STORE
ACCUMULATEUR D'ÉNERGIE ÉLECTRIQUE

(30) Priorität: 06.02.2010 DE 102010007076
(43) Veröffentlichungstag der Anmeldung: 12.12.2012
(73) Patentinhaber: Fraunhofer Gesellschaft zur Förderung der angewandten Wissenschaft E.V., 80686 München (DE)
(72) Erfinder: PFEIFFER, Kai, 70771 Leinfelden (DE); BRIX, Jonathan, 74564 Crailsheim (DE)
(74) Vertreter: Rösler, Uwe
(86) Internationale Anmeldenummer: PCT/EP2011/000536
(87) Internationale Veröffentlichungsnummer: WO 2011/095355

(56) Entgegenhaltungen:
- WO-A1-96/22625
- WO-A1-2010/007681
- WO-A1-2010/109879
- US-A- 5 652 499
- US-A1- 2008 274 400
- US-A1- 2009 066 291

## Beschreibung

### Technisches Gebiet

Die Erfindung bezieht sich auf einen elektrischen Energiespeicher mit Kontaktelektroden zumindest zum Abgriff einer elektrischen Nutzspannung, einer Vielzahl von Energiespeicherzellen, die über eine gemeinsame Kontaktierungseinheit unter Zwischenschaltung einer Kontrolleinheit zur Beeinflussung zumindest eines Entladevorganges der einzelnen Energiespeicherzellen mit den Kontaktelektroden verbunden sind.

### Stand der Technik

Auf dem Gebiet elektromobiler Fortbewegung im Individualverkehr nehmen modulare elektrische Energiespeicher eine zentrale Rolle ein, zumal sie wesentlich mitbestimmend für die Kommerzialisierung von Elektrofahrzeugen sind.

Typischerweise bestehen elektrische Energiespeicher, sog. Sekundärbatterien, für Elektrofahrzeuge aus einem fest verdrahteten Verbund einzelner Energiezellen, die zum Abgriff der elektrischen Nutzspannung sowie auch zum Wiederaufladen mit einem Batteriemanagementsystem und vorzugsweise mit einer zusätzlichen Kühlung innerhalb eines Gehäuses untergebracht sind. Alle Komponenten sind fest miteinander verbaut und stellen ein sog. komplettes einheitliches Batteriepack dar.

Derartige fest in einem Fahrzeug installierte Energiespeichersysteme benötigen für das Wiederaufladen, bspw. bei vollständiger Entladung, mehrere Stunden, wodurch sich die Akzeptanz derartiger Elektrofahrzeuge erheblich von konventionellen Fahrzeugen mit Verbrennungsmotoren unterscheidet, zumal ein typischer Betankungsvorgang wenige Minuten benötigt. Soll dies zugunsten der Elektromobilität geändert werden ist zumindest mittelfristig eine erhebliche Verkürzung des Ladevorganges oder alternativ ein schneller Wechsel des Energiespeichers unerlässlich.

Derzeit existieren Vorschläge, den Energiespeicher für Elektrofahrzeuge modulartig auszubilden und bedarfsweise, d. h. beim entladenen Energiespeicher gegen einen frisch aufgeladenen Energiespeicher an einer Wechselstation auszuwechseln. Ein derartiger Austauschvorgang benötigt in etwa den gleichen Zeitaufwand wie die Betankung eines konventionell angetriebenen Fahrzeuges, jedoch erfordert ein derartiges auf den Austausch modular ausgebildeter Energiespeicher beruhendes Energieversorgungskonzept für Elektrofahrzeuge standardisierte Energiespeichermodule. Die zu erwartende Produktvielfalt auf dem stets größer werdenden Elektromobilmarkt wird dieser Forderung erwartungsgemäß jedoch nicht gerecht werden, zumal gerade der Energiespeichertechnologie eine technologische Schlüsselrolle zukommen wird, die mit jener vergleichbar ist, die derzeit für die Verbrennungsmotoren gilt. Erwartungsgemäß wird jedoch Güte und Qualität künftiger Elektromobile nicht in erster Linie durch den elektromotorischen Antrieb, sondern federführend durch die Energiespeichertechnologie bestimmt sein. Es kann daher davon ausgegangen werden, dass sich die Energiespeichersysteme von unterschiedlichen Herstellern in puncto Qualität, Leistung und Effizienz unterscheiden werden. Sollte das vorstehend beschriebene Konzept, des Austausches von modulartig ausgebildeten Energiespeichern aufgrund des zeitlichen Vorteils durchsetzen, so wäre nach den bisherigen Überlegungen eine Bevorratung von aufgeladenen Energiespeichermodulen von unterschiedlichen Herstellern in den Wechselstationen die Folge wäre. Dies jedoch erfordert eine kaum realisierbare und finanzierbare Logistik.

Derzeit auf dem Markt befindliche elektrische Energiespeicher bestehen aus einer Vielzahl einzelner Energiezellen, bspw. in Form von Lithiumionen- und/oder Lithiumpolymerzellen, die über eine gemeinsame Kontaktierungseinheit zur Erhöhung der Leistungskapazität in Reihe oder parallel zueinander geschaltet sind, so dass an den Kontaktelektroden des Energiespeichers eine elektrische Nutzspannung in der Größenordnung von einigen 100 V und ein Nennstrom in der Größenordnung von einigen 100 A abgreifbar sind. Es ist bekannt, dass unerwünschte Zustände während des Ladens und Entladens auftreten können, wenn eine Energiespeicherzelle oder einige Energiespeicherzellen im elektrischen Verbund mit allen übrigen Energiespeicherzellen wesentliche Eigenschaften zeigt bzw. zeigen, die erheblich von denen anderer Energiespeicherzellen abweichen. Übersteigt bspw. die Ladespannung an einer anormalen Energiespeicherzelle eine vorgegebene Maximalspannungsgrenze, so kann ein derartiger Überspannungszustand die Zelle beschädigen und die Lebensdauer der Zelle sowie weiterer Zellen im elektrischen Verbund erheblich verringern. Aus diesem Grunde sehen moderne elektrische Energiespeichersysteme eine, die einzelnen Energiespeicherzellen überwachende Kontrolleinheit, auch als Batteriemanagementsystem bezeichnet, vor, die den Entlade- sowie auch Ladevorgang der einzelnen Energiespeicherzellen überwacht.

Aus der DE 10 2007 038 532 A1 ist ein gattungsgemäßes Akku- bzw. Batteriepack zu entnehmen, das eine Vielzahl miteinander elektrisch verbundener Energiespeicherzellen umfasst, zu denen einzeln jeweils eine Überwachungsschaltung zugeordnet sind, um die Funktion der jeweiligen Energiespeicherzelle zu überwachen und um abhängig davon Zelleninformationen bereitzustellen, bspw. in Form von Zellenspannung, Zellentemperatur, Zelleninnendruck, Zelleninnenwiderstand und/oder Feuchtigkeit innerhalb der Zelle. Diese Informationen werden über eine Kopplungsanordnung an eine Signalauswerteschaltung übermittelt. Je nach Ausbildungsform kann die Signalauswerteschaltung getrennt vom Akku- bzw. Batteriepack oder in diesem integriert.

Der DE 44 08 740 C1 ist eine Schaltungsanordnung zur Überprüfung einer mehrzelligen Batterie zu entnehmen, wie sie beispielsweise für die Entwicklung von Batterien zum Einsatz kommt, um deren Lebensdauer zu optimieren, oder zur einfachen Fernabfrage des Qualitätszustandes von großen Batterieanlagen, bspw. im Rahmen von Notstromaggregaten, wie dies aus der in der vorstehenden Druckschrift zitierten DE 37 02 591 A hervorgeht. Die bekannte Schaltungsanordnung sieht eine Vielzahl von in Serie geschalteten Batteriezellen vor, von denen jede einzelne Batteriezelle über Messleitungen mit einer Auswerteschaltung verbunden ist. Jede der Auswerteschaltungen ist zu deren Betrieb über ein Kopplungsglied mit einer externen Stromversorgung verbunden. Über weitere Kopplungsglieder ist jede Auswerteschaltung zudem mit einer externen Kontroll- und Steuereinheit verbunden.

Aus WO 2010/007681 A1 ist ein Batteriespeichersystem mit einzelnen elektrischen Energiespeicherzellen bekannt, die jeweils über eine Speichereinheit, eine Ladezustandsmessung und über eine Kontrolleinheit verfügen. Alle Energiespeicherzellen sind in Serie mit einer Batteriemanagementeinheit verbunden sind, über die der Gesamtladezustand des Ensembles abrufbar ist.

Aus US 2008/0274400 A1 geht ein Batteriezellenensemble hervor, das einzelne intelligent aufgebaute Energiespeicherzellen umfasst, die über Verbindungsleitungen mit einem gemeinsamen Kommunikationsknotenpunkt verbunden sind, der wiederum mit einer Kontrolleinheit verbunden ist.

### Darstellung der Erfindung

Der Erfindung liegt die Aufgabe zugrunde einen elektrischen Energiespeicher mit Kontaktelektroden zumindest zum Abgriff einer elektrischen Nutzspannung, einer Vielzahl von Energiespeicherzellen, die über eine gemeinsame Kontaktierungseinheit unter Zwischenschaltung einer Kontrolleinheit zur Beeinflussung zumindest eines Entladevorganges der einzelnen Energiespeicherzellen mit den Kontaktelektroden verbunden sind, wobei in jeder Energiespeicherzelle zumindest ein lese- und schreibfähiger Datenspeicher sowie die Kontrolleinheit integriert ist, wobei in jeder Energiespeicherzelle eine den aktuellen Ladezustand der Energiespeicherzelle dynamisch erfassende Einheit integriert ist, die einen Mikrocontroller sowie einen Zellspannungsmesssensor umfasst und dynamisch Ladezustandsinformationen von der Energiespeicherzelle erstellt und diese in den lese- und schreibfähigen Datenspeicher zur Erstellung und Abspeicherung einer Ladezustandshistorie überträgt,wobei die Kontrolleinheiten aller Energiespeicherzellen über die Kontaktierungseinheit miteinander verbunden sind und ein Netzwerk bilden, über das Informationen zwischen den einzelnen Kontrolleinheiten austauschbar sind zu Zwecken einer Beeinflussung zumindest des Entladevorganges, und wobei jede Energiespeicherzelle über elektrische Anschlusskontakte verfügt, die lösbar mit der Kontaktierungseinheit verbindbar sind, derart weiterzubilden, dass eine individuelle Handhabung einzelner Energiespeicherzellen insbesondere für den Aufladevorgang der Zellen möglich wird, um den Austausch bzw. Wechsel der Energiespeicherzellen innerhalb eines elektrischen Energiespeichers zu vereinfachen sowie auch zeitlich zu verkürzen. Insbesondere sollen Maßnahmen getroffen werden, durch die die Wertbestimmenden Komponenten eines Energiespeichers trotz Auswechseln der Energiespeicherzellen im Energiespeicher erhalten bleiben. So soll insbesondere die Akzeptanz von Batteriewechselsystemen insbesondere auf dem Elektrofahrzeugsektor verbessert werden.

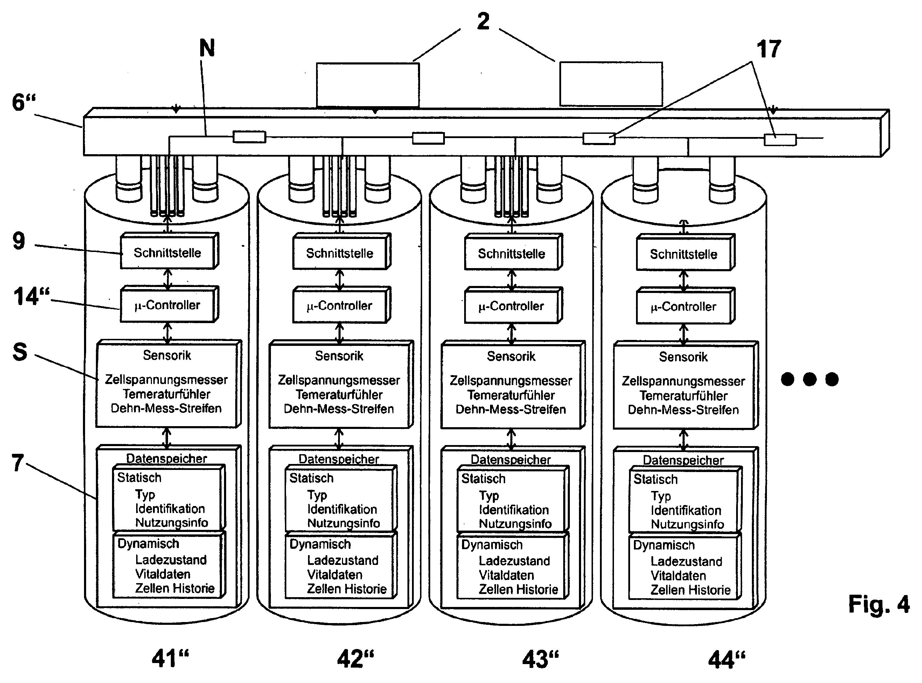

Die Lösung der der Erfindung zugrunde liegenden Aufgabe ist im Anspruch 1 angegeben. Den Lösungsgedanken vorteilhaft weiterbildende Merkmale sind Gegenstand der Unteransprüche sowie der weiteren Beschreibung insbesondere unter Bezugnahme auf ein Ausführungsbeispiel gemäß Fig. 4 zu entnehmen.

Lösungsgemäß ist ein elektrischer Energiespeicher mit Kontaktelektroden zumindest zum Abgriff einer elektrischen Nutzspannung, einer Vielzahl von Energiespeicherzellen, die über eine gemeinsame Kontaktierungseinheit unter Zwischenschaltung einer Kontrolleinheit zur Beeinflussung zumindest eines Entladevorganges der einzelnen Energiespeicherzellen mit den Kontaktelektroden verbunden sind, wobei in jeder Energiespeicherzelle zumindest ein lese- und schreibfähiger Datenspeicher sowie die Kontrolleinheit integriert ist, wobei in jeder Energiespeicherzelle eine den aktuellen Ladezustand der Energiespeicherzelle dynamisch erfassende Einheit integriert ist, die einen Mikrocontroller sowie einen Zellspannungsmesssensor umfasst und dynamisch Ladezustandsinformationen von der Energiespeicherzelle erstellt und diese in den lese- und schreibfähigen Datenspeicher zur Erstellung und Abspeicherung einer Ladezustandshistorie überträgt, wobei die Kontrolleinheiten aller Energiespeicherzellen über die Kontaktierungseinheit miteinander verbunden sind und ein Netzwerk bilden, über das Informationen zwischen den einzelnen Kontrolleinheiten austauschbar sind zu Zwecken einer Beeinflussung zumindest des Entladevorganges, und wobei jede Energiespeicherzelle über elektrische Anschlusskontakte verfügt, die lösbar mit der Kontaktierungseinheit verbindbar sind, dadurch ausgebildet, dass die Kontaktierungseinheit von den Kontrolleinheiten aktiv ansteuerbare Schaltelemente aufweist, die ein Zu- oder Abschalten einzelner Energiespeicherzellen zumindest für den Entladevorgang ermöglichen. Jede einzelne Energiespeicherzelle stellt somit eine mit dem Datenspeicher untrennbare Baueinheit dar, wobei es für die technische Funktionalität der Energiespeicherzelle nicht von Bedeutung ist, ob der Datenspeicher oberflächig sichtbar, auf der Energiespeicherzelle aufgebracht oder als integrale Komponente innerhalb der Energiespeicherzelle verbaut ist. Die elektrischen Anschlusskontakte jeder einzelnen Energiespeicherzelle weisen vorzugsweise ein standardisiertes, verpolungssicheres Layout auf, das eine fehlerhafte Kontaktierung, insbesondere in Fällen, in denen die einzelnen Energiespeicherzellen automatisch, bspw. mit einem Handhabungsroboter manipuliert werden, auszuschließen vermag. Dabei verfügt das für die Leistungsübertragung als auch für die Kommunikation dienende Kontaktierungssystem über eine hohe Robustheit und ist für hohe Steckzyklen ausgelegt. Alternativ zur getrennten Ausbildung der für den Datenaustausch vorgesehenen lösbaren Schnittstelle und den elektrischen Anschlusskontakten seitens der Energiespeicherzellen ist es unter Nutzung geeigneter Modulationstechniken möglich den Datenaustausch und den Nutzenergieaustausch über gemeinsam nutzbare elektrische Kontaktstellen zu realisieren. Derartig ausgebildete Energiespeicherzellen verfügen somit lediglich über zwei elektrische Kontaktstellen, die den beiden elektrischen Polen der Energiespeicherzellen entsprechen, über die sowohl die Nutzspannung als auch die Datenspeicherinhalte abgegriffen werden können. Dies trägt zur Kostenreduzierung sowie auch zu einer Verbesserung der Robustheit der Energiespeicherzelle bei, die bei der modularen Handhabung während eines erforderlichen Austausches aus dem Energiespeicherverbund durchaus mechanische Belastungen erfährt.

Aus dem lese- und schreibfähigen Datenspeicher der Energiespeicherzelle können die dynamisch erfassten Ladezustansinformationen in Form einer Ladezustandshistorie jederzeit ausgelesen werden. Der Begriff "Ladezustandshistorie" bezeichnet den zeitlichen Verlauf von Entlade- und Ladezyklen einer Energiespeicherzelle und umfasst somit Informationen über die bisherige Nutzung der Energiespeicherzelle, bspw. zurückliegende Lade- und Entladezyklen.

Darüber hinaus befinden sich auf dem Datenspeicher die jeweilige Energiespeicherzelle individualisierende Informationen, wie bspw. Zellentyp, Zellenname, Herstellungsdatum, Hersteller etc.. Mit Hilfe sämtlicher dezentral auf jeder einzelnen Energiespeicherzelle abgespeicherten Informationen ist eine zuverlässige Analyse bzw. Bewertung jeder einzelnen Energiespeicherzelle im Hinblick auf ihren gegenwärtigen Ladezustand, ihre allgemeine Zustandsbeschaffenheit sowie die zu erwartende Restlebensdauer möglich. Unter Nutzung der in dem jeweiligen Datenspeicher abgelegten und auslesbaren Informationen kann sowohl zu Zwecken einer kontrollierten Entladung als auch Wiederaufladung die jeweilige Energiespeicherzelle durch die im elektrischen Energiespeicher vorgesehene Kontrolleinheit optimal und individuell angesteuert werden.

Tritt bspw. der Fall auf, dass innerhalb eines elektrischen Energiespeichers eine Energiespeicherzelle hinsichtlich ihrer Ladekapazität von den Ladekapazitäten aller übrigen im Energiespeicher vorhandenen Energiespeicherzellen abweicht, so kann dies mit Hilfe der Kontrolleinheit bei einer kontrollierten Entladung entsprechend berücksichtigt werden, bspw. durch eine Minderentladung der betreffenden Energiespeicherzelle oder es werden anderweitige Maßnahmen getroffen.

In einer bevorzugten Ausführungsform für einen elektrischen Energiespeicher sind weitere Sensoren innerhalb der einzelnen Energiespeicherzellen integriert, die den aktuellen Zustand der jeweiligen Energiespeicherzelle überwachen und deren Sensorsignale entsprechend im Datenspeicher aufgezeichnet werden. So eignet sich hierzu insbesondere ein im Inneren der Energiespeicherzelle integrierter Temperatursensor, mit dem es möglich ist, die Energiezelleninnentemperatur dynamisch zu erfassen. Hierdurch können Überhitzungserscheinungen verzögerungsfrei innerhalb der Energiespeicherzelle erfasst werden, denen mit geeigneten Kontrollmaßnahmen rechtzeitig entgegengetreten werden können, bspw. durch Vorsehen und Aktivieren einer im Inneren des elektrischen Energiespeichers vorgesehenen Kühlung. Alternativ oder in Kombination mit dem Temperatursensor dient ein am oder innerhalb der Energiespeicherzelle integrierter Ausdehnungssensor zur dynamischen Erfassung des Energiezelleninnendruckes, durch den Zellenfehlfunktionen bereits im Frühstadium detektiert werden können. So führt bspw. Eine zelleninterne Gasbildung oder Flüssigkeitsaustritt zu einer signifikanten Zellinnendruckänderung.

Der neben dem vorstehend erläuterten lese- und schreibfähigen Datenspeicher in der Energiespeicherzelle integrierte Mikrocontroller, speichert sämtliche erfassten Sensordaten bzw. Informationen auf den Datenspeicher in zeitlich geordneter Weise ab. Der Mikrocontroller ist auch in der Lage sämtliche sensorisch erfassten Daten und Informationen nach technischer Relevanz zu bewerten und in einer gefilterten und/oder komprimierten Form letztlich abzuspeichern, um auf diese Weise nur jene Ladungszustandsrelevanten Informationen zu erhalten, die für eine zuverlässige Bewertung des aktuellen Ladezustands erforderlich sind. Auf diese weise kann Kosten- und Energieaufwendiger Speicherplatz eingespart werden.

Zusätzlich zu den den Ladezustand beschreibenden Informationen, die sich letztlich aus der chronologischen Erfassung der Zellenspannungswerte jeweils für eine Energiespeicherzelle ergeben und die aktuelle Ladekapazität beschreiben, können die an einer Energiespeicherzelle sensorisch erfassten Informationen, wie Zellspannung, Temperatur und Innendruck, für eine weiterführende Bewertung der Energiespeicherzelle verwendet werden, nämlich zur Bestimmung des Alterungszustandes der Energiespeicherzelle. Der Alterungszustand einer Energiespeicherzelle quantifiziert die mit zunehmendem Alter der Energiespeicherzelle degradierende Ladekapazität und ermöglicht zumindest eine Abschätzung über die technisch nutzbare Restlebenddauer, d.h. Anzahl von technisch noch nutzbaren Lade- und Entladezyklen. In Kenntnis des Alterungszustandes der Vielzahl im Energiespeicher eingesetzten Energiespeicherzellen lässt sich bspw. eine logistisch wertvolle Information dahingehend ableiten, wie viel neue Energiespeicherzellen zu bevorraten sind, um sie bei Bedarf anstelle von "verbrauchten" Energiespeicherzellen einzusetzen.

Die vorstehend erläuterten Ausführungsformen ermöglichen jeweils eine dezentrale, zellenbasierte Datenhaltung in einem Datenspeicher, der in einer Energiespeicherzelle integriert ist, wodurch sich die Möglichkeit eines individuellen Wechsels aller oder einzelner Energiespeicherzellen aus einem elektrischen Energiespeicher eröffnet.

Der Energiespeicher sieht so die Ausbildung von einer Vielzahl über die Kontaktierungseinheit zu einem Netzverbund miteinander verbundener "intelligenter" Energiespeicherzellen vor, in denen jeweils die Kontrolleinheit dezentral vorgesehen ist. Derartig ausgebildete Energiespeicherzellen, in denen zumindest ein lese- und schreibfähiger Datenspeicher sowie die Kontrolleinheit, vorzugsweise in Form eines Mikrokontrollers integriert sind, ermöglicht den Aufbau von nahezu beliebig erweiterbaren Energiespeichersystemen, in denen die im Netzwerkverbund miteinander verschalteten einzelnen Energiespeicherzellen miteinander in einem Datenaustausch stehen und somit den Entlade- oder Ladevorgang adaptiv, d.h. Fallabhängig vom Ladezustand einer jeden einzelnen Energiespeicherzelle beeinflussen können.

Die Kontaktierungseinheit ist mit von der Kontrolleinheit bzw. von den Kontrolleinheiten aktiv ansteuerbaren Schaltelementen, bspw. in Form von physikalischen, elektronischen oder induktiven Schaltern bzw. An-/Abkopplungselementen, ausgestattet, die ein Zu- oder Abschalten einzelner Energiespeicherzellen zumindest für den Entladevorgang ermöglichen.

Ferner sei bspw. angenommen, dass ein lösungsgemäß ausgebildeter elektrischer Energiespeicher in einem fahrzeugspezifischen, crashsicher ausgebildeten Gehäuse untergebracht ist und zur elektrischen Energieversorgung für ein Elektrofahrzeug dient. Bei einem erforderlichen Austausch bzw. Wechsel eines elektrischen Energiespeichers wird der erneut aufzuladende elektrische Energiespeicher aus dem Fahrzeug entnommen. Ein bereits in der Wechselstation bevorrateter, aufgeladener Energiespeicher wird in das Fahrzeug eingesetzt, so dass das Fahrzeug innerhalb weniger Minuten die Wechselstation verlassen kann. Aus dem, aus dem Fahrzeug entnommene Energiespeicher werden die leeren Energiespeicherzellen entnommen, vorzugsweise automatisiert mit Hilfe eines Roboters, und gegen bereits voll aufgeladene Energiespeicherzellen ausgetauscht, die in die entsprechenden Kontaktplätze eingefügt werden. Die entleerten Energiespeicherzellen werden einer Prüfung und einem anschließenden Ladevorgang unterzogen, bei dem der Ladevorgang unter Berücksichtigung der aus dem jeweiligen Datenspeicher entnommenen Energiespeicherzelleninformation zellenspezifisch vorgenommen wird.

Das Aufladen der Energiespeicherzellen muss jedoch nicht nur durch eine externe Ladestation, wie vorstehend erläutert, erfolgen. Sie kann auch bereits im laufenden Fahrzeugbetrieb durch das Rückspeisen von aufgenommener Energie des mobilen Fahrzeuges, z.B. Bremsenergie im Generatorbetrieb der Antriebe, gezielt einzelnen dafür geeigneten Energiespeicherzellen im Speicherverbund zugeführt werden.

### Kurze Beschreibung der Erfindung

Die Erfindung wird nachstehend ohne Beschränkung des allgemeinen Erfindungsgedankens anhand eines Ausführungsbeispiels gemäß Fig. 4 unter Bezugnahme auf die Zeichnungen exemplarisch beschrieben. Es zeigen:
- Fig. 1: erste einfache Form für einen elektrischen Energiespeicher,
- Fig. 2: erweiterte zweite Form eines elektrischen Energiespeichers,
- Fig. 3: Illustration eines Ladevorganges von entleerten Energiespeicherzellen sowie
- Fig. 4: Lösungsgemäße Ausführungsform für einen intelligenten Energiespeicher.

### Wege zur Ausführung der Erfindung, gewerbliche Verwendbarkeit

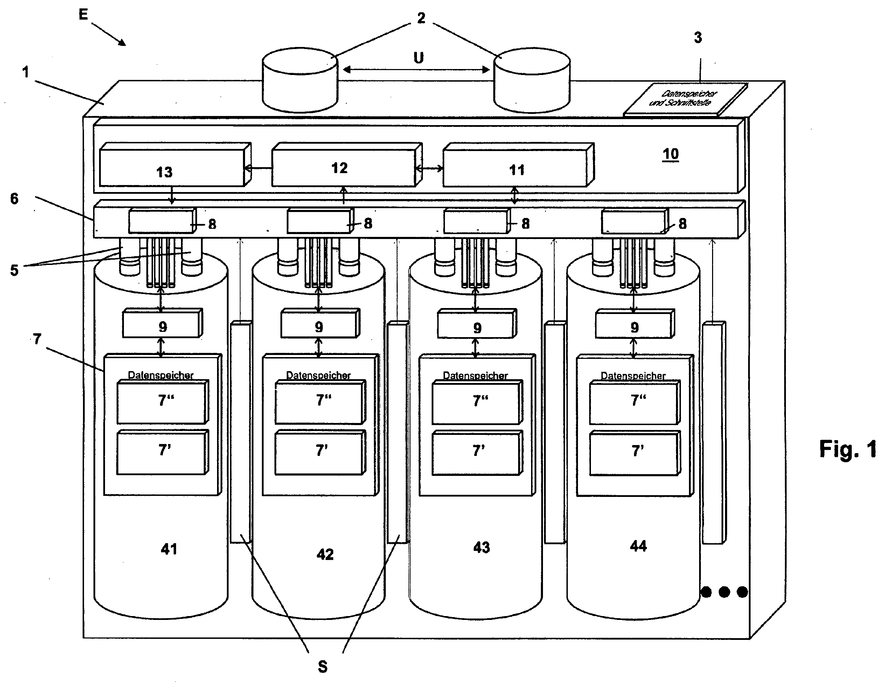

Figur 1 zeigt in schematischer Darstellung einen elektrischen Energiespeicher E, der von einem Gehäuse 1 umgeben ist, das vorzugsweise fahrzeugspezifisch zur lösbarfesten Implementierung an ein Elektrofahrzeug ausgebildet ist. An der Außenseite des Gehäuses 1 sind zum Abgriff einer elektrischen Nutzspannung U zwei Kontaktelektroden 2 vorgesehen sowie eine Schnittstelle 3, über die den Energiespeicher betreffende Informationen an eine externe Wechselstation (nicht dargestellt) übertragen werden können. Hierauf wird im Weiteren im Einzelnen noch eingegangen.

Das Gehäuse 1 ist mit einem Deckel (nicht dargestellt) verschließbar, Figur 1 zeigt jedoch einen geöffneten Gehäusezustand. Im Inneren des Gehäuses 1 sind vier Energiespeicherzellen 41 bis 44 integriert-selbstverständlich stehen die vier Energiespeicherzellen stellvertretend für eine große Vielzahl von Energiespeicherzellen. Jede einzelne Energiespeicherzelle weist zur Leistungsstromübergabe Anschlusskontakte 5 auf, die lösbar mit einer ebenso innerhalb des Gehäuses 1 vorgesehenen Kontaktierungseinheit 6 in elektrischem Kontakt stehen. Ferner weist jede einzelne Energiespeicherzelle einen Datenspeicher 7 auf, der unlösbar jeweils mit der Energiespeicherzelle verbunden ist. Der Datenspeicher 7 verfügt zumindest über einen dynamischen lese- und schreibfähigen Datenspeicher 7', in den dynamisch Ladezustandsinformationen von der jeweiligen Energiespeicherzelle abspeicherbar sind. Zur Erfassung des Ladezustandes ist in dem in Figur 1 illustrierten Beispiel in der Kontaktierungseinheit 6 eine jeder einzelnen Energiespeicherzelle zugeordnete Zellspannungsmesseinheit 8 vorgesehen, die über eine Schnittstelle 9 mit dem Datenspeicher 7, 7' verbunden ist und über die die Ladezustandsinformationen in den lese- und schreibfähigen Datenspeicher 7' übertragen und dort abgespeichert werden.

Die einzelnen Energiespeicherzellen 41 bis 44 sind über die Kontaktierungseinheit 6 mit einer Kontrolleinheit 10 verbunden, die u. a. einen Mikroprozessor 11 aufweist, der bspw. für die Durchführung der pro Energiespeicherzelle vorgesehenen Zellspannungsmessung sorgt sowie auch für die dynamische Abspeicherung der pro Energiespeicherzelle ermittelten Ladezustandsinformationen in den Datenspeicher 7'. Darüber hinaus befinden sich innerhalb des Gehäuses 1 im Bereich der Energiespeicherzellen 41 bis 44 weitere, den aktuellen Zustand der einzelnen Energiespeicherzellen charakterisierende Sensoren S, in Form eines Temperatursensors sowie auch eines Ausdehnungssensors, deren Sensorsignale über den Mikroprozessor 11 gemeinsam mit den Ladezustandsinformationen in den Datenspeicher 7' zur Abspeicherung übertragen werden. Im Rahmen einer ebenfalls in der Kontrolleinheit 10 vorgesehenen Zellenüberwachungseinheit 12 erfolgt die sensorische Zusammenführung aller zellenspezifischer Zustandsinformationen, d. h. Ladezustand, Temperatur und Ausdehnung, die einer Überwachung dahingehend unterzogen werden, so dass überprüft wird, ob die einzelnen gemessenen Zellenparameter jeweils in einem vorgebbaren Toleranzbereichen liegen. Treten entsprechende Abweichungen auf, so gilt es geeignete Gegenmaßnahmen zu treffen, indem bspw. die Entladung bei einer entsprechenden Energiespeicherzelle spezifisch geändert wird oder aber der Ladevorgang wird entsprechend auf den aktuellen Zellenzustand angepasst. Hierzu sorgt eine Steuereinheit 13, die zumindest den Entladevorgang der einzelnen Energiespeicherzellen in Abhängigkeit von seitens der Zellüberwachungseinheit 12 vorgegebenen Kriterien vornimmt. Neben dem bereits erwähnten lese- und schreibfähigen Datenspeicher 7' verfügt der Datenspeicher 7 auch über einen statischen, d. h. lediglich einen lesefähigen Datenspeicher 7", der zumindest eine die Energiespeicherzelle identifizierende Information enthält, die Rückschlüsse auf den Typ der Zelle sowie auch ihre Anordnung innerhalb des elektrischen Energiespeichers ermöglicht.

Der technische Vorteil des Energiespeichers besteht darin, dass jede einzelne Energiespeicherzelle vollkommen autonom über sämtliche Informationen verfügt, die für eine individuelle Behandlung bzw. Nutzung der Energiespeicherzelle im Rahmen eines Entlade- sowie auch Ladevorganges erforderlich sind. Mit Hilfe der in dem Datenspeicher 7 abgelegten Informationen ist es zum einen möglich, die Energiespeicherzelle zu identifizieren und darüber hinaus anhand ihrer Nutzungshistorie im Hinblick auf Ladezustand Qualität und zu erwartender Lebensdauer zu qualifizieren. Dies eröffnet die Möglichkeit jede einzelne Energiespeicherzelle aus dem Verbund des elektrischen Energiespeichers zu entnehmen, bspw. mit Hilfe eines automatisierten Wechselsystems und einer Wiederaufladestation zuzuführen, die die Energiespeicherzelle unter Berücksichtigung der aus dem Datenspeicher auslesbaren Informationen sehr zellenspezifisch optimiert wieder auflädt.

Über die neben den Kontaktelektroden 2 am Gehäuse 1 angebrachte elektrische Schnittstelle 3 können sämtliche Informationen, die über den Mikroprozessor 11 aus den Datenspeichern 7 jeder einzelnen Energiespeicherzellen 41 bis 44 ausgelesen werden, an eine externe Auswerteeinheit bspw. an eine Wechselstation gesamtheitlich übergeben werden. In Abhängigkeit davon kann der Entnahme- sowie Aufladevorgang jeder einzelnen Energiespeicherzelle zellen- und zeitoptimiert vorgenommen werden.

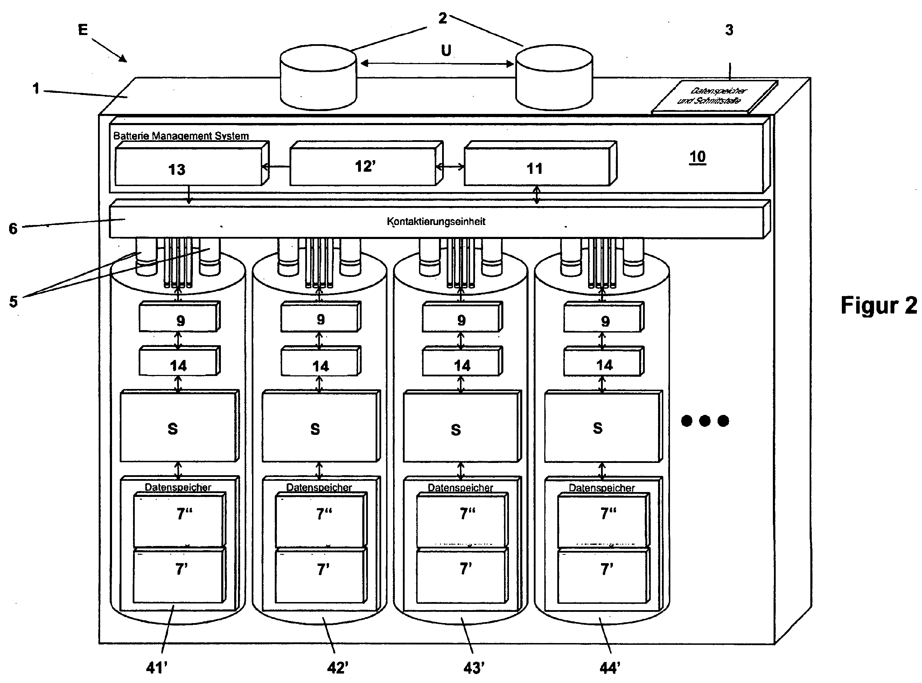

Figur 2 zeigt ein erweitertes Beispiel für einen elektrischen Energiespeicher, der gleichfalls in einem Gehäuse 1 eine Vielzahl einzelner Energiespeicherzellen 41' bis 44' vorsieht, die im Unterschied zum Beispiel in Figur 1 zusätzlich eine Sensorik S sowie einen Mikrocontroller 14 vorsehen. Jede einzelne Energiespeicherzelle 41' bis 44' stellt somit eine vollständig autonome Energiespeicherzelleneinheit dar, die mittels einer "onboard" Sensorik S die aktuelle Zellenspannung mit einem Zellenspannungsmesser, die Zelleninnentemperatur mittels eines Temperaturfühlers sowie den Zelleninnendruck mit Hilfe eines Ausdehnungssensors, vorzugsweise in Form eines Dehnmess-Streifens zu erfassen vermag. Die Sensorik S wird über einen Mikrocontroller 14, der ebenfalls am oder innerhalb des Gehäuses 1 an die Energiespeicherzelle 41', 42', 43', 44' angebracht ist, angesteuert, wobei die seitens der Sensorik S generierten Sensordaten in den lese- und schreibfähigen Datenspeicher 7' übertragen und abgespeichert werden. Im Datenspeicher 7' befinden sich somit Informationen, die den aktuellen Ladezustand, die sog. Vitaldaten in Form von Temperatur und Innendruck sowie die sich daraus ergebende Zellenhistorie widerspiegeln. Ferner befindet sich im Datenspeicher 7 im Bereich des statischen Datenspeicherteils 7" die jeweilige Energiespeicherzelle identifizierende Informationen, die Hinweise auf den Hersteller, das Herstellerdatum, Nutzungsinformationen etc. enthalten.

In gleicher Weise wie im vorstehend erläuterten Beispiel gemäß Figur 1 verfügen die Energiespeicherzellen 41' bis 44' über Kontaktelektroden 5, die über ein standardisiertes verpolungssicheres Layout verfügen und mittels leichter und schneller Handhabung in den elektrischen Energiespeicher implementiert bzw. aus diesem entnommen werden können. Das gleiche gilt auch für die Kontaktierung der Schnittstelle 9 mit der innerhalb des Energiespeichers vorgesehenen Kontaktierungseinheit 6, die im Unterschied zum Beispiel gemäß Figur 1 nun nicht über separate Zellspannungsmesseinrichtungen 8 verfügt. In gleicher Weise sorgt eine Kontrolleinheit 10 für eine kontrollierte Datenerfassung und -auswertung der aus den Datenspeichern 7 jeder einzelnen Energiespeicherzelle auslesbaren Informationen mit Hilfe eines Mikroprozessors 11, der in Kommunikation mit einer Überwachungseinheit 12' steht, die wiederum mit einer Steuereinheit 13 verbunden ist, die zumindest die Entladung der einzelnen Energiespeicherzellen in Abhängigkeit von Seiten der Auswerteeinheit 12' bereitgestellten Energiespeicherzellen spezifischen Kriterien beeinflusst.

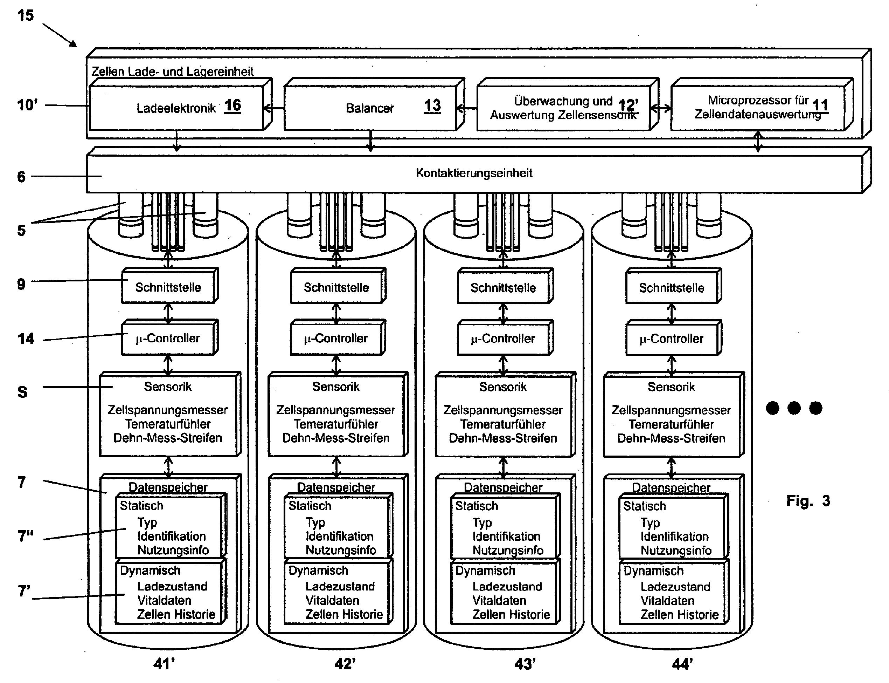

In Figur 3 ist eine Ladestation 15 zum Aufladen der in Figur 2 beschriebenen Energiespeicherzellen 41' bis 44'. Um Wiederholungen zu vermeiden, werden bereits erläuterte Komponenten mit den bereits eingeführten Bezugszeichen versehen.

Aus den über die Kontaktierungseinheit 6 mit der Ladestation 15 elektrisch verbundenen, einzeln aufzuladenden Energiespeicherzellen 41' bis 44' werden aus den jeweiligen Datenspeichern 7 sämtliche Informationen ausgelesen und im Rahmen der in der Ladestation 15 vorhandenen Kontrolleinheit 10' ausgewertet. Dies erfolgt gleichfalls mit Hilfe eines Mikroprozessors 11 und einer mit diesen verbundenen Überwachungs- und Auswerteeinheit 12'. In Abhängigkeit der jeweiligen Nutzungshistorie sowie auch des jeweils aktuellen Ladezustandes einer Energiespeicherzelle erfolgt eine individuelle Beladung derselben jeweils kontrolliert bzw. gesteuert durch eine Steuereinheit 13, die mit der Ladeelektronik 16 der Ladestation 15 in Verbindung steht.

Durch die von jeder einzelnen Energiespeicherzelle 41', 42', 43', 44' bereitgestellten Informationen, die sowohl die Nutzugshistorie bzw. Ladungshistorie als auch den aktuellen Zustand beschreiben, kann der Ladevorgang sehr schnell und zellenspezifisch durchgeführt werden, zumal zeitraubende und komplizierte Einmessvorgänge jeder einzelnen Energiespeicherzelle vermieden werden können. Auf diese Weise ist es ebenfalls schnell möglich festzustellen, ob zu ladende Energiespeicherzellen einem weiteren Ladevorgang unterzogen werden können oder aufgrund festgestellter Fehler oder alterungsbedingter Degradationen auszutauschen sind.

Durch die dezentralisierte, d. h. zellenbasierte Datenhaltung, können die einzelnen als Standardmodule ausgebildete Energiespeicherzellen aus dem jeweiligen elektrischen Energiespeicher modular entnommen werden, wohingegen wertbestimmende Komponenten, wie bspw. das crashsicher ausgebildete Gehäuse 1, die leistungsfähigen Elektronikkomponenten, wie bspw. die Kontaktierungseinheit 6 sowie Kontrolleinheit 10 als auch eine optional innerhalb des Gehäuses 1 vorzusehende Kühlvorrichtung innerhalb des elektrischen Energiespeichers erhalten bleiben. Somit kann gewährleistet werden, dass herstellungsspezifische Energiespeicher in ihren wesentlichen wertbestimmenden Komponenten unverändert bleiben. Lediglich gilt es bei einer Wechselstation die einzelnen standardisierten Energiespeicherzellen entsprechend auszutauschen. Für die Praxis bedeutet dies, dass für den Nutzer eines Elektrofahrzeuges sichergestellt ist, dass beim Austausch eines entladenen elektrischen Energiespeichers gegen einen frisch aufgeladenen Energiespeicher gewährleistet ist, der frisch aufgeladene Energiespeicher über die wertbestimmenden, zumeist herstellungsspezifischen Komponenten verfügt, wodurch die Akzeptanz eines derartigen Energiespeicherwechselsystems entscheidend verbessert werden kann.

Der in Figur 4 illustrierte lösungsgemäße elektrische Energiespeicher setzt den Einsatz von intelligent aufgebauten einzelnen Energiespeicherzellen 41 ", 42", 43", 44" voraus, die über lösbare elektrische Kontakt 5" lediglich mit einer elektrischen Kontaktierungseinheit 6" verbunden sind, die ihrerseits die elektrischen Kontaktelektroden 2 zum Angriff der Nutzspannung U vorsieht. Es sei darauf hingewiesen, dass die elektrischen Kontakte 5" zum modularen Einsetzen und Entnehmen der einzelnen Energiespeicherzellen 41", 42", 43", 44" in bzw. aus den Zellenverbund sowohl getrennte Anschlusskontakte für die Leistungsversorgung und den Datenaustausch vorsehen, wie dies bei den Energiespeicherzellen 41", 42" und 43" der Fall ist, oder aber in besonders vorteilhafter Weise lediglich zwei Kontaktpole aufweisen, über die sowohl die Zellennutzspannnung als auch die Daten abgegriffen werden können, wie dies im Fall der Energiespeicherzelle 44" angedeutet ist. Durch eine z.B. aufmodulierte "Power-Line Kommunikation" können getrennte und zusätzliche Leitungen und Kontakte für eine Datenschnittstelle komplett wegfallen. Dann bleiben nur noch die beiden Pole der Energiespeicherzellen selbst als einzige elektrisch leitende Kontaktstellen, siehe Energiespeicherzelle 44".

Im Unterschied zum vorstehend erläuterten Beispiel in Figur 3 übernimmt der in den einzelnen Energiespeicherzellen integrierte Mikrocontroller 14" die Aufgaben der bisherigen, zentralen Kontrolleinheit (10, 10') hinsichtlich des Batteriemanagement.

Alle übrigen Komponenten bezüglich der Sensorik S und des Datenspeichers 7 verbleiben unverändert. Somit stellt jede einzelne Energiespeicherzelle eine autarke und intelligent überwachte Energiespeicherzelle dar, die ihre Daten über ein Netzwerk N, das durch die Kontaktierungseinheit 6" realisiert ist, sämtlichen übrigen im Netzverbund vorhandenen Energiespeicherzellen zur Verfügung stellt. Im Rahmen dieses intelligenten Netzwerkes N, vergleichbar mit "cloud computing", kann der gesamte Energiespeicherbetrieb, d.h. Entladen und Laden bezogen auf jede einzelne Energiespeicherzelle, im Rahmen eines adaptiv, regel basiert lernenden Netzwerkes vorgenommen werden. Das individuelle Entladen oder auch Aufladen einzelner Energiespeicherzellen im Netzwerk N setzt eine aktiv gesteuerte Zuschaltfunktion voraus. Eine solche Funktion kann durch explizit ansteuerbare physikalische, elektronische oder induktive Schalter 17 innerhalb des Netzwerkes N realisiert werden Dies verbessert und vereinfacht das Batteriezellenmanagament maßgeblich insbesondere bei nicht-regulären Betriebszuständen einzelner Zellen (safety cases).

### Bezugszeichenliste

- 1: Gehäuse
- 2: Kontaktelektroden
- 3: Elektrische Schnittstelle
- 41 bis 44 sowie: Energiespeicherzelle
- 41' bis 44':
- 5: Anschlusselektroden
- 6: Kontaktierungseinheit
- 7: Datenspeicher
- 7': Lese- und schreibfähiger Datenspeicher
- 7": Statischer Datenspeicher
- 8: Zellspannungsmesseinheit
- 9: Schnittstelle
- 10: Kontrolleinheit
- 11: Mikroprozessor für Zelldatenauswertung
- 12, 12': Auswerteeinheit
- 13: Steuereinheit
- 14: Mikrocontroller
- 15: Ladestation
- 16: Ladeelektronik
- 17: Schalter
- U: Nutzspannung
- E: Elektrischer Energiespeicher
- S: Sensorik
- N: Netzwerk

## Patentansprüche

1. Elektrischer Energiespeicher mit Kontaktelektroden (2) zumindest zum Abgriff einer elektrischen Nutzspannung, einer Vielzahl von Energiespeicherzellen (41, 42, 43, 44), die über eine gemeinsame Kontaktierungseinheit (6) unter Zwischenschaltung einer Kontrolleinheit (10) zur Beeinflussung zumindest eines Entladevorganges der einzelnen Energiespeicherzellen (41, 42, 43, 44) mit den Kontaktelektroden (2) verbunden sind, wobei in jeder Energiespeicherzelle (41, 42, 43, 44) zumindest ein lese- und schreibfähiger Datenspeicher (7') sowie die Kontrolleinheit (10) integriert ist,
wobei in jeder Energiespeicherzelle (41, 42, 43, 44) eine den aktuellen Ladezustand der Energiespeicherzelle (41, 42, 43, 44) dynamisch erfassende Einheit integriert ist, die einen Mikrocontroller (14) sowie einen Zellspannungsmesssensor (8) umfasst und dynamisch Ladezustandsinformationen von der Energiespeicherzelle (41, 42, 43, 44) erstellt und diese in den lese- und schreibfähigen Datenspeicher (7') zur Erstellung und Abspeicherung einer Ladezustandshistorie überträgt,
wobei die Kontrolleinheiten (10) aller Energiespeicherzellen (41, 42, 43, 44) über die Kontaktierungseinheit (6) miteinander verbunden sind und ein Netzwerk (N) bilden, über das Informationen zwischen den einzelnen Kontrolleinheiten (10) austauschbar sind zu Zwecken einer Beeinflussung zumindest des Entladevorganges, und wobei jede Energiespeicherzelle (41, 42, 43, 44) über elektrische Anschlusskontakte (5) verfügt, die lösbar mit der Kontaktierungseinheit (6) verbindbar sind,
**dadurch gekennzeichnet, dass** die Kontaktierungseinheit (6) von den Kontrolleinheiten (10) aktiv ansteuerbare Schaltelemente aufweist, die ein Zu- oder Abschalten einzelner Energiespeicherzellen zumindest für den Entladevorgang ermöglichen.

2. Energiespeicher nach Anspruch 1,
**dadurch gekennzeichnet, dass** in jeder Energiespeicherzelle (41, 42, 43, 44) wenigstens ein Temperatursensor zur dynamischen Erfassung einer Energiezelleninnentemperatur und/oder ein Ausdehnungssensor zur dynamischen Erfassung eines Energiezelleninnendruckes enthalten sind und
dass Sensorwerte entsprechend der dynamisch erfassten Energiezelleninnentemperatur und/oder des dynamisch erfassten Energiezelleninnendruckes mittels des Mikrocontrolles (14) in den lese- und schreibfähigen Datenspeicher (7') zur Erstellung und Abspeicherung einer Innentemperatur- und/oder Innendruckhistorie übertragbar sind.

3. Energiespeicher nach Anspruch 1 oder 2,
**dadurch gekennzeichnet, dass** die Kontrolleinheit (10) wenigstens folgende Komponenten umfasst:
a) Auswerteeinheit (12, 12') für die aus den Datenspeichern (7) der einzelnen Energiespeicherzellen (41, 42, 43, 44) auslesbaren Informationen bezüglich des aktuellen Ladezustandes, Innendruckes und/oder der Innentemperatur sowie bezüglich der Historien des Ladezustandes, Innendruckes und/oder der Innentemperatur und
b) Steuereinheit (13), ein so genannter Balancer, die zumindest den Entladevorgang der einzelnen Energiespeicherzellen (41, 42, 43, 44) in Abhängigkeit von seitens der Auswerteeinheit (12, 12') bereitzustellenden Energiespeicherzellen (41, 42, 43, 44) spezifischen Kriterien beeinflusst.

4. Energiespeicher nach einem der Ansprüche 1 bis 3,
**dadurch gekennzeichnet, dass** die lösbare Schnittstelle (9) und die elektrischen Anschlusskontakte in jeder Energiespeicherzelle als einheitliche Anschlusskontakte zusammengelegt und ausgeführt sind und/oder
dass die Kontaktelektroden (2) und die Schnittselle (3) am Gehäuse (1) als einheitliche Anschlusskontakte zusammengelegt und ausgeführt sind.

## Claims

1. Electrical energy store having contact electrodes (2) at least for tapping an electrical useful voltage, a plurality of energy storage cells (41, 42, 43, 44), which are connected to the contact electrodes (2) via a common contacting unit (6) by means of an interconnected control unit (10) to influence at least one discharge process of the individual energy storage cells (41, 42, 43, 44), wherein at least one readable and writable data memory (7') and the control unit (10) are integrated in each energy storage cell (41, 42, 43, 44),
wherein a unit is integrated in each energy storage cell (41, 42, 43, 44) that dynamically detects the current charge state of the energy storage cell (41, 42, 43, 44), said unit comprising a microcontroller (14) as well as a cell voltage measurement sensor (8) and dynamically creating charge state information on the energy storage cell (41, 42, 43, 44) and transmitting said information to the readable and writable data memory (7') for creating and storing a charge state history,
wherein the control units (10) of all energy storage cells (41, 42, 43, 44) are connected to each other via the contacting unit (6), and form a network (N) via which information can be exchanged between the individual control units (10) for the purposes of influencing at least the discharge process, and wherein each energy storage cell (41, 42, 43, 44) has electrical connection contacts (5) which can be detachably connected to the contacting unit (6),
**characterized in that**
the contacting unit (6) has switching elements that can be actively controlled by the control units (10), which enable individual energy storage cells to be switched on or off, at least for the discharging process.

2. Electrical energy store according to Claim 1, **characterized in that**
each energy storage cell (41, 42, 43, 44) contains at least one temperature sensor for dynamically detecting an energy cell internal temperature and/or a strain sensor for dynamically detecting an energy cell internal pressure, and
that sensor values corresponding to the dynamically detected energy cell internal temperature and/or to the dynamically detected energy cell internal pressure can be transmitted by means of the microcontroller (14) to the readable and writable data memory (7') to create and store an internal temperature history and/or an internal pressure history.

3. Electrical energy store according to Claim 1 or 2,
**characterized in that**
the control unit (10) comprises at least the following components:
(a) analysis unit (12, 12') for the information that can be read from the data memories (7) of the individual energy storage cells (41, 42, 43, 44) in relation to the current charge state, internal pressure and/or the internal temperature, and in relation to the histories of the charge state, internal pressure and/or the internal temperature, and
(b) a control unit (13), a so-called balancer, which influences at least the discharge process of the individual energy storage cells (41, 42, 43, 44) according to criteria specific to energy storage cells (41, 42, 43, 44) that are to be provided by the analysis unit (12, 12').

4. Electrical energy store according to any one of Claims 1 to 3,
**characterized in that**
the detachable interface (9) and the electrical connection contacts in each energy storage cell are designed and implemented as integrated connection contacts and/or
the contact electrodes (2) and the interface (3) on the housing (1) are designed and implemented as integrated connection contacts.

## Revendications

1. Accumulateur d'énergie électrique avec des électrodes de contact (2) au moins pour le prélèvement d'une tension utile électrique, une pluralité de cellules d'accumulation d'énergie (41, 42, 43, 44) lesquelles sont reliées, par l'intermédiaire d'une unité de mise en contact (6) commune en montant de manière intermédiaire une unité de commande (10) pour influencer au moins un processus de décharge des cellules d'accumulation d'énergie (41, 42, 43, 44) individuelles, aux électrodes de contact (2), moyennant quoi dans chaque cellule d'accumulation d'énergie (41, 42, 43, 44) au moins une mémoire de données lisible et inscriptible (7') ainsi que l'unité de commande (10) sont intégrées,
moyennant quoi, dans chaque cellule d'accumulation d'énergie (41, 42, 43, 44), une unité détectant de manière dynamique l'état de charge actuel de la cellule d'accumulation d'énergie (41, 42, 43, 44) est intégrée, laquelle comprend un microcontrôleur (14) ainsi qu'un capteur de mesure de tension de cellule (8) et établit de manière dynamique des informations d'état de charge de la cellule d'accumulation d'énergie (41, 42, 43, 44) et transfère celles-ci dans la mémoire de données lisible et inscriptible (7') pour établir et sauvegarder un historique d'état de charge,
les unités de commande (10) de toutes les cellules d'accumulation d'énergie (41, 42, 43, 44) étant reliées ensemble par l'intermédiaire de l'unité de mise en contact (6) et formant un réseau (N) via lequel il est possible d'échanger des informations entre les unités de commande (10) individuelles dans le but d'influencer au moins le processus de décharge, et chaque cellule d'accumulation d'énergie (41, 42, 43, 44) disposant de contacts de connexion électrique (5), lesquels peuvent être reliés de manière détachable à l'unité de mise en contact (6),
**caractérisé en ce que** l'unité de mise en contact (6) présente des éléments de commutation pouvant être commandés activement par les unités de commande (10), lesquels permettent une mise en, ou hors circuit de cellules d'accumulation d'énergie individuelles au moins pour le processus de décharge.

2. Accumulateur d'énergie selon la revendication 1, **caractérisé en ce que** chaque cellule d'accumulation d'énergie (41, 42, 43, 44) contient au moins un capteur de température pour la détection dynamique d'une température interne de cellule d'énergie et/ou un capteur de dilatation pour la détection dynamique d'une pression interne de cellule d'énergie et **en ce que** les valeurs du capteur peuvent être transférées, conformément à la température interne de cellule d'énergie détectée dynamiquement et/ou à la pression interne de la cellule d'énergie détectée dynamiquement, à l'aide du microcontrôleur (14), dans la mémoire de données lisible et inscriptible (7') afin d'établir et sauvegarder un historique de température interne et/ou de pression interne.

3. Accumulateur d'énergie selon la revendication 1 ou 2, **caractérisé en ce que** l'unité de commande (10) comprend au moins les composants suivantes :
a) une unité d'évaluation (12, 12') pour les informations pouvant être lues dans la mémoire de données (7) des cellules d'accumulation d'énergie (41, 42, 43, 44) individuelles en ce qui concerne l'état de charge actuel, la pression interne et/ou la température interne ainsi qu'en ce qui concerne les historiques de l'état de charge, de la pression interne et/ou de la température interne et
b) une unité de commande (13), une dénommée égalisatrice, laquelle influence au moins le processus de décharge des cellules d'accumulation d'énergie (41, 42, 43, 44) individuelles en fonction de critères spécifiques aux cellules d'accumulation d'énergie (41, 42, 43, 44) à mettre à disposition par l'unité d'évaluation (12, 12').

4. Accumulateur d'énergie selon l'une des revendications 1 à 3, **caractérisé en ce que** l'interface (9) détachable et les contacts de connexion électrique dans chaque cellule d'accumulation d'énergie sont assemblés et réalisés en tant que contacts de connexion homogènes et/ou **en ce que** les électrodes de contact (2) et l'interface (3) sur le boîtier (1) sont assemblées et réalisées en tant que contacts de connexion homogènes.
